# EUROPEAN PATENT SPECIFICATION

(11) **EP 2 873 620 B1**
(45) Date of publication and mention of the grant of the patent: **16.05.2018**
(21) Application number: 13192836.8
(22) Date of filing: 14.11.2013
(51) Int. Cl.: B64F 5/00, B29C 67/00

(54) **Repair method for fuselage components of aircraft or spacecraft**
Reparaturverfahren für Rumpfkomponenten von Luft- oder Raumfahrzeug
Procédé de réparation de composants de fuselage d'aéronef ou d'engin spatial

(43) Date of publication of application: 20.05.2015
(73) Proprietor: Airbus Operations GmbH, 21129 Hamburg (DE)
(72) Inventor: Hegenbart, Matthias, 21702 Ahlerstedt (DE); Benthien, Hermann, 27367 Sottrum (DE)
(74) Representative: Isarpatent

(56) References cited:
- WO-A1-01/20534
- WO-A1-2012/131327
- CA-A1- 2 833 925
- US-A1- 2009 282 664
- US-A1- 2011 107 578
- US-A1- 2013 270 750

## Description

The present invention relates to a repair method for fuselage components of aircraft or spacecraft, in particular by using additive layer manufacturing (ALM) and/or additive manufacturing (AM) processes.

Metal fuselage components of aircraft or spacecraft need to be repaired, if the structural integrity of the component is comprised by ditches, scratches, indentations or bucklings. A typical repair process for metal and carbon fibre reinforced polymers (CFRP) structures involves removing the damaged structure and closing the resulting hole or gap by means of riveted or glued patches.

Wiedemann, J.: "Leichtbau 2: Konstruktion"; 2nd ed., Springer Verlag, 1996, pp. 434-435, for example, discloses conventional repair methods for shell components of aircraft using bolted or adhesively bonded doublers which are adhered over a damaged area of the shell component similar to a patch or plaster.

Additive layer manufacturing (ALM) techniques may be used in repairing damaged components, as exemplified in EP 2 495 397 A2 which discloses a method for repairing a turbine component with a distressed portion. The method includes machining the turbine component into a first intermediate turbine article such that the distressed portion is removed, and rebuilding the first intermediate turbine article into the turbine component with an additive manufacturing process.

Of late, AlMgSc alloys are used as new aluminum alloys that have been developed for forming fuselage and shell components of aircraft. Those materials lower the production costs, fuel consumption and maintenance. Particularly joining processes may be a combination of welding and relaxation forming with AlMgSc alloys which have low density, high strength and toughness, good welding properties and high corrosion resistance.

Repair methods for such fuselage components have hitherto been complex and pricy. Document US 2009/0282664 A1 for example discloses a repair method for the outer skin of an aircraft in which a damage site is cut out and an inner patch covering the cut-out hole is from an inner side of the skin. The hole is then closed with a middle patch having a scarfed rim and both patches are adhesively bonded with the skin.

One object of the invention is therefore to provide a repair method for fuselage components of aircraft which neither change the outer shape nor impair the structural behavior of the components.

This object is achieved by a method for repairing fuselage components of an aircraft or spacecraft having the features of claim 1.

A first aspect of the invention pertains to a method for repairing fuselage components of an aircraft or spacecraft, the method comprising removing component material in a region around a damaged area to form a recess in the fuselage component, attaching at least one doubler to one surface of the fuselage component, the at least one doubler covering the region around the damaged area, and filling the recess with a filler material using additive layer manufacturing.

The idea on which the present invention is based is to use additive layer manufacturing (ALM) or additive manufacturing (AM) technology when repairing a damaged metal or CFRP fuselage component. With ALM/AM the structural properties of the repaired component is not compromised. It is possible to provide a one-to-one repair without changing the outer shape of the repaired component. Since the need for additional glue or rivets is obviated, the resulting repaired component is lighter than a conventionally repaired component. Finally, the introduction of internal stress into the repaired component is reduced since only low energy peaks are created when implementing the repair method of the invention.

Advantageously, laser shock peening may be employed during the repair, thereby improving the fatigue resistance of the repaired component. Moreover, ALM/AM offers the opportunity to introduce crack stoppers into the filler of the removed damaged region in order to provide local reinforcements which prevent crack propagation.

According to an embodiment of the method, ALM may be performed using powder bed technology. Alternatively, ALM may be performed using wire feed technology.

According to a further embodiment of the method, the fuselage component may comprise an AlMgSc alloy. For example, Scalmalloy® may be used which is suited for high and very high-strength extrusions, offering exceptionally high fatigue properties and the same positive manufacturing propensities as AlMgSc sheet material. Scalmalloy® provides robust solutions for the use of aluminium alloys when high specific strength and exceptional high corrosion resistance are desired, while at the same time offering the additional advantages of robust manufacturing chains and low-cost production schemes. Additionally, it has the highest microstructure material stability for "low carbon footprint" applications.

According to another embodiment of the method, removing component material may comprise milling, machining or cutting.

According to another embodiment of the method, the recess in the fuselage component may reach through the fuselage component and comprise chamfered milling edges. Chamfered edges aid in implementing the process of ALM, especially in laser-assisted welding procedures.

According to another embodiment of the method, the at least one doubler may be glued to the surface of the fuselage component. Preferably, the surface of the fuselage component may be the inner surface so that the outer surface of the shell component may be re-manufactured with a smooth surface.

According to another embodiment of the method, the fuselage component may comprise a stringer or frame in the region of the damaged area, and attaching at least one doubler to one surface of the fuselage component may comprise attaching at least two doubler brackets on the surface of the fuselage component, the doubler brackets being adjoined to the stringer or frame. Particularly for damages in regions with complex joint geometries, the method of the first aspect is superior to conventional methods due to its flexibility in adapting to complex joints.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a fuselage of an aircraft under repair according to an embodiment of the invention.
Fig. 2 schematically illustrates an additive layer manufacturing device.
Fig. 3 schematically illustrates a further additive layer manufacturing device.
Fig. 4 schematically illustrates stages of an additive layer manufacturing procedure for repairing fuselage components of an aircraft according to an embodiment of the invention.
Fig. 5 schematically illustrates stages of an additive layer manufacturing procedure for repairing fuselage components of an aircraft according to another embodiment of the invention.
Fig. 6 schematically illustrates a method for repairing fuselage components of an aircraft according to a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Free form fabrication (FFF), direct manufacturing (DM) and additive manufacturing (AM) belong to a general hierarchy of layer manufacturing (LM) methods. Those methods are used to form a three-dimensional solid object by sequentially building up layers of material. Any of such procedures will be referred to in the following description as additive layer manufacturing (ALM) without loss of generality. ALM techniques usually include selectively depositing material layer by layer, selectively fusing or solidifying the material and removing excess material, if needed.

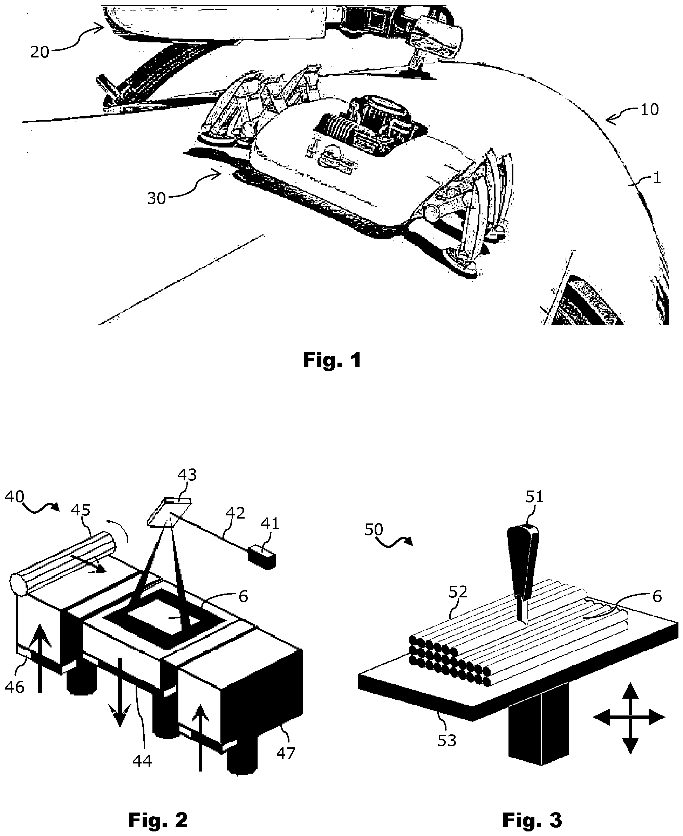

Fig. 1 shows a schematic illustration of a fuselage 10 of an aircraft under repair. The fuselage 10 may comprise a shell or outer skin 1 which may be subject to damage, for example scratches, indentations, bucklings, fractures, cracks or other structural injuries. When repairing such damages it is possible to use different repair tools such as a repair robot arm 20 and/or a mobile crawler repair robot 30. Apart from the actual repair, both repair systems 20 and 30 may also perform milling and/or laser shock peening and/or conventional shock peening for pre-treating the damaged fuselage or fuselage component.

Figs. 2 and 3 show schematic illustrations of different repair tool platforms which may be employed in the repair systems for the repair of damages in fuselages or fuselage components 10 such as the repair robot arm 20 or the mobile crawler repair robot 30 in Fig. 1. Fig. 2 shows a powder bed repair station 40 which comprises a laser 41, a deflection device 43, a powder bed container 44 and one or more powder feed cartridges 46, 47. A component to be repaired is placed in the powder bed of the powder bed container 44. The powder feed cartridges 46, 47 hold a basic metal powder substance comprising laser-fusible particles.

The laser 41, for example an infra-red laser, emits a laser beam 42 which is directed by a deflective device 43 including 2D scanning optics onto the powder bed container 44. The laser beam 42 defines a two-dimensional pattern in the thin bed of metal powder. At the impinging positions of the laser beam 42, the metal powder is fused to form a solid layer. Upon completion of a layer, the powder bed container 44 is lowered in vertical direction by some elevation mechanism. The powder bed is then replenished to the original level using a powder feed roller 45 which is moved horizontally in order to convey new powder from the powder feed cartridges 46, 47 and deposit a uniform layer above the previously fused layer. The process of selectively fusing the next layer is then repeated. In this iterative manner, a three-dimensional structure is progressively built up being composed of multiple two-dimensional individual layers the thickness of which is typically on the order of several tens of µm.

Another possible ALM procedure is the wire feed technology as schematically depicted in Fig. 3. A wire feed repair station 50 comprises a wire guiding device 51 which builds up layers of wire 52 onto a build-up table 53. Depending on the length, orientation and segmentation of the wires 20, any desired three-dimensional structure made from a multitude of wire pieces may be progressively built up. The wires 52 are fused together using an electron beam source, a laser source or any other suitable source for selectively coupling melting of fusing heat into the wires 52.

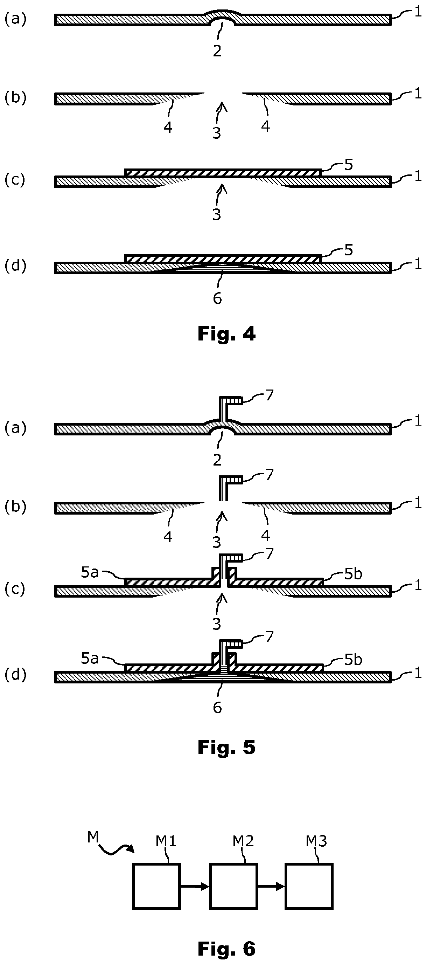

Fig. 4 schematically depicts stages of a repair procedure of a fuselage component 1 having a damaged area 2. The fuselage component 1 may particularly be a shell component of an aircraft or spacecraft. The damaged area 2 - as shown in stage (a) - may for example be a bulge, a dent, a scratch, an indentation, a buckling, a crack, a fracture or any similar structural damage of the fuselage component 1. The fuselage component 1 may for example comprise or consist of AlMgSc alloy such as Scalmalloy®.

First, component material is removed from one surface around the damaged area 2 to form a recess 3 or gap in the fuselage component 1. The recess 3 may in particular reach through the entire thickness of the fuselage component 1 to the other surface. The removal of component material may comprise any suitable process such as milling, machining or cutting. In particular, it may be advantageous to form the recess 3 in the fuselage component 1 in such a way that chamfered milling edges 4 are generated, resulting in a cone-shaped recess gap. The pre-treated machined or milled intermediate component is shown exemplarily in stage (b).

After forming the recess 3, a doubler 5 is attached to one surface of the fuselage component 1, the at least one doubler 5 covering the region around the damaged area 2. The doubler 5 may for example be a rectangular or circular doubler plate or doubler foil, as exemplarily shown in stage (c). The doubler 5 may for example be glued to the surface of the fuselage component 1. Alternatively, the doubler 5 may be riveted to the surface of the fuselage component 1.

Finally, the recess 3 is filled with a filler material 6 using additive layer manufacturing, ALM. For example, ALM is performed using powder bed technology or wire feed technology. To this end, a repair robot arm 20 or a crawler repair robot 30 as shown in Fig. 1 may be employed, using repair stations 40 or 50 as exemplarily illustrated in Figs. 2 and 3, respectively, depending on the desired ALM technology. The filler material 6 is fabricated in such a way that a smooth surface opposite to the surface with the doubler 5 is created, as exemplarily shown in stage (d). Advantageously, the smooth surface may be an outside shell surface of the fuselage component 1.

Fig. 5 schematically illustrates stages of a variant of an ALM procedure for repairing fuselage components 1 of an aircraft. Unlike in Fig. 4 the fuselage component 1 comprises a stringer or frame 7 in the region of the damaged area 2, as shown in stage (a). After machining or milling the recess 3 as shown in stage (b), at least two doubler brackets 5a, 5b are attached to the surface of the fuselage component 1, the doubler brackets 5a, 5b being adjoined to the stringer or frame 7, as shown in stage (c). The form, type, number and shape of the doubler brackets 5a, 5b may vary depending on the joint geometry of the stringer or frame 7 with the fuselage component 1 at the particular damage region 2.

Again, as shown in stage (d), the respective recess 3 is filled with filler material 6 using additive layer manufacturing, ALM.

Fig. 6 schematically illustrates a method for repairing fuselage components of an aircraft. The method M may in particular be employed in repairing fuselage components 1 as shown in Figs. 4 and 5.

At M1, component material in a region around a damaged area 2 is removed to form a recess 3 in the fuselage component 1. At least one doubler is then attached to one surface of the fuselage component 1 at M2, the at least one doubler covering the region around the damaged area 2. Finally, at M3, the recess 3 is filled with a filler material 6 using additive layer manufacturing, ALM.

The methods and procedures as exemplarily discussed herein in conjunction with repair of damaged structural components may also be employed to join structural components or fuselage elements.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents as disclosed in the claims. Many other examples will be apparent to one skilled in the art upon reviewing the above specification. In particular, the embodiments and configurations described for the composite reinforcement components and structural elements can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Fuselage component
- 2: Damaged area
- 3: Recess
- 4: Chamfer
- 5: Doubler
- 5a: Doubler bracket
- 5b: Doubler bracket
- 6: Filler
- 7: Stringer/Frame
- 10: Fuselage
- 20: Repair robot arm
- 30: Mobile repair robot
- 40: Powder bed repair station
- 41: Laser
- 42: Laser beam
- 43: Deflection device
- 44: Powder bed container
- 45: Powder feed roller
- 46: Powder feed cartridge
- 47: Powder feed cartridge
- 50: Wire feed repair station
- 51: Wire guiding device
- 52: Wire
- 53: Build-up table
- M: Method
- M1: Method step
- M2: Method step
- M3: Method step
- M4: Method step
- M5: Method step

## Claims

1. Method (M) for repairing a fuselage component (1) of an aircraft or spacecraft, the method (M) comprising:
removing (M1) component material in a region around a damaged area (2) to form a recess (3) in the fuselage component (1); and
attaching (M2) at least one doubler (5; 5a, 5b) to one surface of the fuselage component (1), the at least one doubler (5; 5a, 5b) covering the region around the damaged area (2),
the method being **characterized by**
filling (M3) the recess (3) with a filler material (6) using additive layer manufacturing, ALM.

2. Method (M) according to claim 1, wherein ALM is performed using powder bed technology.

3. Method (M) according to claim 1, wherein ALM is performed using wire feed technology.

4. Method (M) according to one of the claims 1 to 3, wherein the fuselage component (1) comprises an AlMgSc alloy.

5. Method (M) according to one of the claims 1 to 3, wherein removing (M1) component material comprises milling, machining or cutting.

6. Method (M) according to claim 5, wherein the recess (3) in the fuselage component (1) reaches through the fuselage component (1) and comprises chamfered milling edges (4).

7. Method (M) according to one of the claims 1 to 6, wherein the at least one doubler (5; 5a, 5b) is glued to the surface of the fuselage component (1).

8. Method (M) according to one of the claims 1 to 7, wherein the fuselage component (1) comprises a stringer or frame (7) in the region of the damaged area (2), and wherein attaching (M2) at least one doubler (5; 5a, 5b) to one surface of the fuselage component (1) comprises attaching at least two doubler brackets (5a, 5b) to the surface of the fuselage component (1), the doubler brackets (5a, 5b) being adjoined to the stringer or frame (7).

## Patentansprüche

1. Verfahren (M) zum Reparieren einer Rumpfkomponente (1) eines Luftfahrzeugs oder Raumfahrzeugs, wobei das Verfahren (M) Folgendes umfasst:
Entfernen (M1) von Komponentenmaterial in einer Region um einen beschädigten Bereich (2), um eine Vertiefung (3) in der Rumpfkomponente (1) zu bilden, und
Anbringen (M2) mindestens eines Verdopplers (5; 5a, 5b) an einer Fläche der Rumpfkomponente (1), wobei der mindestens eine Verdoppler (5; 5a, 5b) die Region um den beschädigten Bereich (2) abdeckt,
wobei das Verfahren **gekennzeichnet ist durch** Füllen (M3) der Vertiefung (3) mit einem Füllmaterial (6) unter Verwendung von Additivschicht-Herstellung, ALM.

2. Verfahren (M) nach Anspruch 1, wobei ALM unter Verwendung von Pulverbett-Technologie durchgeführt wird.

3. Verfahren (M) nach Anspruch 1, wobei ALM unter Verwendung von Drahtvorschub-Technologie durchgeführt wird.

4. Verfahren (M) nach einem der Ansprüche 1 bis 3, wobei die Rumpfkomponente (1) eine AlMgSc-Legierung umfasst.

5. Verfahren (M) nach einem der Ansprüche 1 bis 3, wobei ein Entfernen (M1) von Komponentenmaterial ein Fräsen, Bearbeiten oder Schneiden umfasst.

6. Verfahren (M) nach Anspruch 5, wobei die Vertiefung (3) in der Rumpfkomponente (1) durch die Rumpfkomponente (1) reicht und abgeschrägte Fräskanten (4) umfasst.

7. Verfahren (M) nach einem der Ansprüche 1 bis 6, wobei der mindestens eine Verdoppler (5, 5a, 5b) an die Fläche der Rumpfkomponente (1) geklebt ist.

8. Verfahren (M) nach einem der Ansprüche 1 bis 7, wobei die Rumpfkomponente (1) einen Tragbalken oder Rahmen (7) in der Region des beschädigten Bereichs (2) umfasst und wobei ein Anbringen (M2) mindestens eines Verdopplers (5; 5a, 5b) an einer Fläche der Rumpfkomponente (1) ein Anbringen von mindestens zwei Verdopplerklammern (5a, 5b) an der Fläche der Rumpfkomponente (1) umfasst, wobei die Verdopplerklammern (5a, 5b) an den Tragbalken oder Rahmen (7) angeschlossen sind.

## Revendications

1. Procédé (M) de réparation d'un élément de fuselage (1) d'un aéronef ou astronef, le procédé (M) comprenant les étapes consistants à :
enlever (M1) du matériau de l'élément dans une région autour d'une zone endommagée (2) afin de former un évidement (3) dans l'élément de fuselage (1) ; et
appliquer (M2) au moins une tôle de renfort (5 ; 5a, 5b) sur une surface de l'élément de fuselage (1), l'au moins une tôle de renfort (5 ; 5a, 5b) couvrant la région autour de la zone endommagée (2),
le procédé étant **caractérisé par**
remplir (M3) l'évidement (3) avec un matériau de remplissage (6) en utilisant la fabrication par addition de couche (ALM).

2. Procédé (M) selon la revendication 1, dans lequel l'ALM est réalisée en utilisant une technologie sur lit de poudre.

3. Procédé (M) selon la revendication 1, dans lequel l'ALM est réalisée en utilisant une technologie par alimentation de fil.

4. Procédé (M) selon une des revendications 1 à 3, dans lequel l'élément de fuselage (1) comprend un alliage AlMgSc.

5. Procédé (M) selon une des revendications 1 à 3, dans lequel l'enlèvement (M1) du matériau de l'élément comprend un fraisage, un usinage ou un découpage.

6. Procédé (M) selon la revendication 5, dans lequel l'évidement (3) dans l'élément de fuselage (1) traverse l'élément de fuselage (1) et comprend des bords de fraisage chanfreinés (4).

7. Procédé (M) selon une des revendications 1 à 6, dans lequel l'au moins une tôle de renfort (5 ; 5a, 5b) est collée à la surface de l'élément de fuselage (1).

8. Procédé (M) selon une des revendications 1 à 7, dans lequel l'élément de fuselage (1) comprend une lisse ou un cadre (7) dans la région de la zone endommagée (2), et dans lequel l'application (M2) de l'au moins une tôle de renfort (5 ; 5a, 5b) sur une surface de l'élément de fuselage (1) comprend l'application d'au moins deux supports de tôle de renfort (5a, 5b) sur la surface de l'élément de fuselage (1), les supports de tôle de renfort (5a, 5b) étant adjoints à la lisse ou au cadre (7).
